# EUROPÄISCHE PATENTSCHRIFT

(11) **EP 1 457 362 B1**
(45) Veröffentlichungstag und Bekanntmachung des Hinweises auf die Patenterteilung: **11.10.2006**
(21) Anmeldenummer: 04000828.6
(22) Anmeldetag: 16.01.2004
(51) Int. Cl.: B60G 11/27, F16F 9/05

(54) **Luftfeder mit einer ersten und einer zweiten Arbeitskammer**
Air spring with a first and a second chamber
Ressort à air comprenant une première et une seconde chambre

(30) Priorität: 14.03.2003 DE 10311263
(43) Veröffentlichungstag der Anmeldung: 15.09.2004
(73) Patentinhaber: AUDI AG, 85045 Ingolstadt (DE)
(72) Erfinder: Stingl, Hanno, 85110 Kipfenberg (DE); van Meel, Franciscus, 85113 Böhmfeld (DE)

(56) Entgegenhaltungen:
- DE-A- 3 436 664
- DE-B- 1 132 013
- US-A- 5 996 980
- PATENT ABSTRACTS OF JAPAN Bd. 018, Nr. 090 (M-1560), 15. Februar 1994 (1994-02-15) -& JP 05 296278 A (BRIDGESTONE CORP), 9. November 1993 (1993-11-09)

## Beschreibung

Die Erfindung betrifft eine Luftfeder mit einer ersten und einer zweiten Arbeitskammer mit unterschiedlichen Durchmessern und Volumina gemäß der im Oberbegriff des Anspruches 1 angegebenen Art.

Derartige Luftfedern sind hinreichend bekannt und finden beispielsweise als Fahrzeugfederungen bei Personenkraftwagen, aber auch bei Lastkraftwagen Verwendung.

Eine gattungsgemäße Luftfeder ist z. B. in der DE 34 36 664 C2 offenbart. Die Luftfeder umfasst hierbei zwei unterschiedlich große Luftkammern, die jeweils von einem Gehäuse und einem so genannten Abrollkegel begrenzt sind. Zwischen Abrollkegel und Gehäuse ist jeweils ein Rollbalg angeordnet. Die beiden Abrollkegel sind über eine Verbindungsstange starr miteinander verbunden. Zwischen den beiden Luftkammern ist eine Trennwand mit annähernd H-förmigen Querschnitt eingebracht. Um eine notwendige Dämpfwirkung beim Ein- und Ausfedern zu erzeugen, stehen die beiden Gehäuse - genauer die beiden Luftkammern - über eine in der Trennwand ausgebildete Drosselöffnung miteinander in Verbindung.

Gemäß einer Ausführungsform der gattungsgemäßen Luftfeder (vgl. Fig. 1 der DE 34 36 664 C2) ist die Verbindungsstange zentral, also entlang der Mittelachse, angeordnet. Die Trennwand weist eine Durchführungsöffnung auf, durch die die Verbindungsstange relativ zur Trennwand vertikal verschiebbar ist.

Um ein kontrolliertes und ausschließliches Durchströmen von Luft durch die hierfür vorgesehenen Drosselöffnungen zu gewährleisten, ist zwischen der Trennwand und der Verbindungsstange ein O-Ring angeordnet. Zur Reduzierung der durch die vertikale Relativbewegung zwischen Verbindungsstange und die Verbindungsstange umfassenden Durchtrittsöffnung hervorgerufenen Reibung ist wenigstens die Verbindungsstange oder die Durchführungsöffnung in der Trennwand mit einem reibungsarmen Material beschichtet.

Bei Betrieb der Luftfeder ergibt sich nun folgender Zielkonflikt: Eine "straffe" Abdichtung zwischen Trennwand und Verbindungsstange führt aufgrund der hierdurch bedingten erhöhten Reibung zu einer dynamischen Federverhärtung (vgl. Fig. 5) und somit zu Einbußen beim Federungskomfort. Wird hingegen die Luftfeder mit einer "schwachen" Abdichtung zwischen Verbindungsstange und Trennwand betrieben, so ist ein ungewolltes Überströmen durch die Durchtrittsöffnung zu beobachten, was mit einem entsprechenden Dämpfkraftverlust verbunden ist (vgl. Fig. 3).

Zwar ist in der DE 34 36 664 C2 eine weitere Ausführungsform (vgl. Fig. 14) der gattungsgemäßen Luftfeder beschrieben, bei der die starre Verbindung der beiden Abrollkegel anstatt über eine zentrale, reibungsbehaftete Verbindungsstange über einen äußeren Rahmen erfolgt, jedoch erweist sich diese Ausführungsform als nachteilhaft, da sie sich nicht kardanisch in Achsanordnungen integrieren lässt.

Der Erfindung liegt die Aufgabe zugrunde, eine Luftfeder mit einer ersten und einer zweiten Arbeitskammer mit unterschiedlichen Durchmessern und Volumina gemäß der im Oberbegriff des Anspruches 1 angegebenen Art derart weiterzubilden, dass unter Vermeidung der genannten Nachteile eine reibungslose Relativbewegung innerhalb der Luftfeder beim Ein- und Ausfedern ermöglicht wird und die Luftfeder zudem kardanisch in Achsanordnungen integrierbar ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildung der Erfindung.

Der Erfindung liegt die Erkenntnis zugrunde, dass bei geeigneter Anordnung der Luftfeder-Rollbalge eine axiale Führung innerhalb der Luftfeder durch radiale Balgsteifigkeiten erfolgen kann.

Nach der Erfindung weist die Luftfeder eine erste und eine zweite Arbeitskammer mit unterschiedlichen Durchmessern und Volumina auf. Die beiden Arbeitskammern sind jeweils von einem ersten und einem zweiten Gehäuseteil, einer ersten Abrollfläche und einer zweiten Abrollfläche, sowie einem ersten und einem zweiten zwischen den entsprechenden Gehäuseteilen und den entsprechenden Abrollflächen angeordneten Rollbalg begrenzt. Die beiden Arbeitskammern sind in ihrem Volumen veränderbar und stehen über mehrere Drosselöffnungen miteinander in Verbindung. Kennzeichnend ist, dass die zweite Abrollfläche zumindest teilweise der Mantelfläche eines mit dem ersten Gehäuseteil fest verbundenen, zentral angeordneten, bereichsweise in die zweite Arbeitskammer hineinreichenden, rohrförmigen Körpers - Abrollrohr - entspricht. Die erforderliche Trennung und Abdichtung zwischen den beiden Arbeitskammern erfolgt über den zweiten und einen dritten Rollbalg, wobei der dritte Rollbalg dem zweiten Rollbalg, insbesondere spiegelsymmetrisch, gegenüberliegend zwischen dem zweiten Gehäuseteil und der zweiten Abrollfläche angeordnet ist. Durch die erfindungsgemäße Anordnung der beiden Rollbalge zwischen dem zweiten Gehäuse und dem Abrollrohr ist auf einfache Art und Weise eine Luftfeder realisiert, die eine reibungslose Relativbewegung innerhalb der Luftfeder beim Ein- und Ausfedern ermöglicht. Als besonders vorteilhaft erweist sich neben der kompakten Bauform der Luftfeder der Umstand, dass die Luftfeder kardanisch in Achsanordnungen integrierbar ist.

Ein einfacher konstruktiver Aufbau der Luftfeder wird dadurch gewährleistet, dass die erste Abrollfläche zumindest teilweise der Mantelfläche des zweiten Gehäuseteils entspricht.

Die für die Dämpfwirkung der Luftfeder notwendigerweise vorzusehenden Drosselöffnungen zwischen den beiden Arbeitskammern-sind vorzugsweise in das Abrollrohr eingebracht. Die Größe der Drosselöffnungen bestimmen die Dämpfkraftkennlinien des Federbeins.

Um eine eindeutige Ausrichtung der Rollfalte des zweiten und dritten Rollbalgs zu gewährleisten, sind in das zweite Gehäuseteil im Bereich zwischen dem zweiten und dem dritten Rollbalg Entlüftungsbohrungen eingebracht.

Vorzugsweise ist zwischen der zweiten Arbeitskammer und dem in die zweite Arbeitskammer hineinreichenden Bereich des Abrollrohrs ein zusätzliches, zwischen Abrollrohr und zweitem Gehäuseteil wirksames Federelement angeordnet.

Gemäß einer Ausführungsform der Erfindung umfasst dieses Federelement eine zentral angeordnete mit der Bodenfläche des zweiten Gehäuseteils fest verbundene und in das Abrollrohr über eine zugeordnete Durchtrittsöffnung hineinreichende Federstange, sowie jeweils eine von der Federstange geführte, an der Bodenfläche befindliche Zusatzfeder und eine im Abrollrohr befindliche Zuganschlagfeder.

Um unerwünschte reibungsbehaftete Relativbewegungen zwischen Federstange und Abrollrohr zu verhindern, ist die Federstange freistehend in der Durchtrittsöffnung des Abrollrohrs geführt, so dass zwischen der Federstange und der Durchtrittsöffnung ein Ringspalt verbleibt.

Vorzugsweise ist die Größe des Ringspalt so dimensioniert, dass er als zusätzliche Drosselöffnung dient.

Gemäß einer weiteren Ausführungsform der Erfindung ändert sich der Durchmesser der ersten und/oder zweiten Abrollfläche in Achsrichtung. Eine Beeinflussung/Einstellung der Federkennlinie der Luftfeder ist somit auf eine einfache Art und Weise durchführbar.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden anhand der in der Zeichnung dargestellten Ausführungsbeispielen näher beschrieben. In der Beschreibung, in den Ansprüchen und in der Zeichnung werden die in der hinten angeführten Liste der Bezugszeichen verwendeten Begriffe und zugeordneten Bezugszeichen verwendet.

In der Zeichnung bedeutet:
- Fig. 1: eine Querschnittsansicht einer Luftfeder nach der Erfindung, und
- Fig. 2: eine weitere Querschnittsansicht einer erfindungsgemäßen Luftfeder mit zusätzlichen Federelementen.

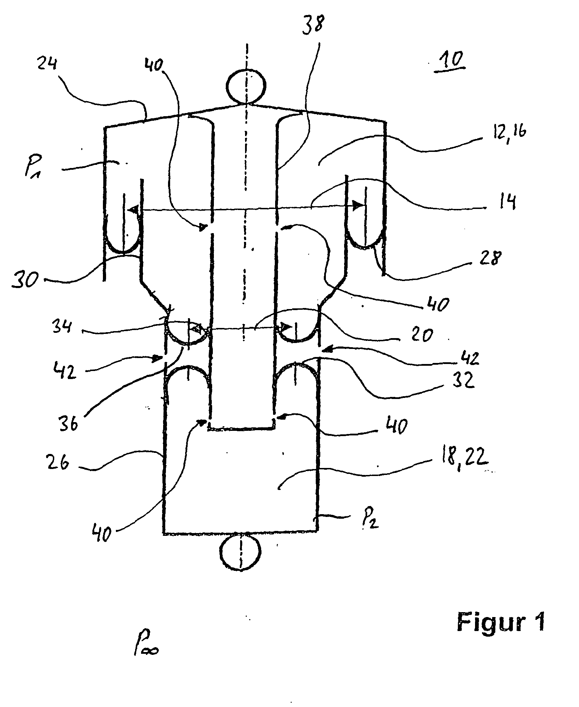

Die in Fig. 1 mehr oder minder schematisch dargestellte und insgesamt mit der Bezugsziffer 10 bezeichnete Luftfeder umfasst im Wesentlichen eine erste Arbeitskammer 12 mit einem wirksamen Durchmesser 14 und einem ersten Volumen 16 sowie eine zweite Arbeitskammer 18, die einen wirksamen Durchmesser 20 und ein zweites Volumen 22 aufweist. Die beiden Arbeitskammern 12, 18 sind in ihren Volumen 16, 22 veränderbar und der wirksame Durchmesser 14 der ersten Arbeitskammer 12 ist größer als der wirksame Durchmesser 20 der zweiten Arbeitskammer 18. Die beiden Arbeitskammern 12, 18 weisen einen Arbeitsdruck P₁, P₂ auf, der jeweils größer als der Umgebungsdruck P_{∞} ist.

Die erste Arbeitskammer 12 ist von einem ersten, zylinderförmigen Gehäuseteil 24, einem zweiten zylinderförmigen Gehäuseteil 26 sowie einem ersten Rollbalg 28 begrenzt. Der erste Rollbalg 28 ist zwischen dem ersten Gehäuseteil 24 und einer ersten Abrollfläche 30, die zumindest teilweise der Mantelfläche des zweiten Gehäuseteils 26 entspricht, angeordnet.

Die zweite Arbeitskammer 18 wird aus dem zweiten, zylinderförmigen Gehäuseteil 26 und einem zweiten Rollbalg 32 gebildet. Der zweite Rollbalg 32 zwischen dem zweiten Gehäuseteil 26 und einer zweiten Abrollfläche 34 angeordnet.

Ein dritter Rollbalg 36 ist dem zweiten Rollbalg 32 gegenüberliegend, also entsprechend zwischen dem zweiten Gehäuseteil 26 und der zweiten Abrollfläche 34 angeordnet.

Die Abdichtung der beiden Arbeitskammern zueinander erfolgt somit ausschließlich über den zweiten und dritten Rollbalg 32, 36.

Mit dem Boden des zylinderförmigen ersten Gehäuseteils 24 ist ein rohrförmiger Körper, nachfolgend als Abrollrohr 38 bezeichnet, fest verbunden. Das Abrollrohr 38 ist zentral am Boden des ersten Gehäuseteils 24 angeordnet und erstreckt sich bereichsweise in die zweite Arbeitskammer 18 hinein. Die Mantelfläche des bereichsweise in die zweite Arbeitskammer 18 hineinreichenden Abrollrohrs 38 entspricht dabei zumindest teilweise der zweiten Abrollfläche 34.

Während der erste Rollbalg 28 die Federrate der Luftfeder 10 über den Federweg bestimmt, ist durch die radiale Balgsteifigkeit der gegenüberliegend angeordneten Rollbalge 32, 36 eine axiale Führung innerhalb der Luftfeder 10 und somit eine Abstützung des Abrollrohrs 38 zum zweiten Gehäuseteil 26 sichergestellt.

In das Abrollrohr 38 sind mehrere Drosselöffnungen 40 eingebracht, so dass eine kontrollierte Luftströmung zwischen der ersten Arbeitskammer 12 und zweiter Arbeitskammer 18 bzw. vice versa möglich ist.

Damit eine eindeutige Ausrichtung der Rollfalte des zweiten Rollbalgs 32 und des dritten Rollbalgs 36 gewährleistet ist, sind in das zweite Gehäuseteil 26 im Bereich zwischen dem zweiten und dritten Rollbalg 32, 36 mehrere Entlüftungsbohrungen 42 eingebracht.

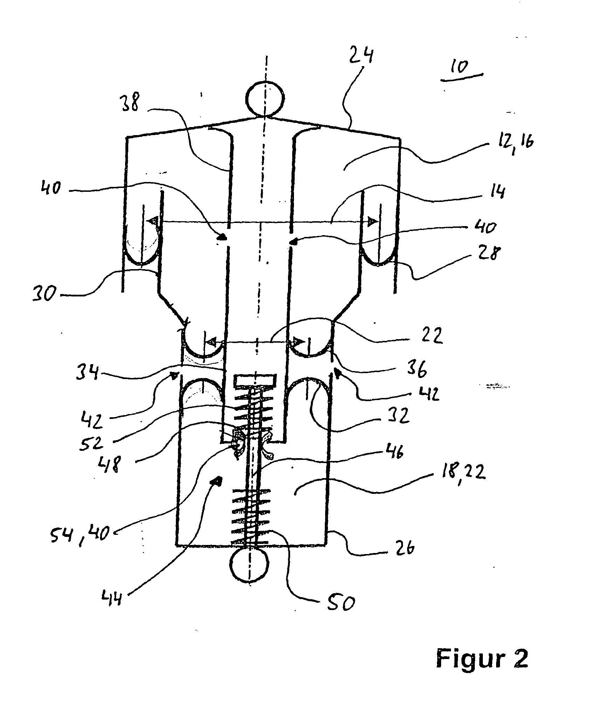

Nach dem in Fig. 2 dargestellten Ausführungsbeispiel der Erfindung ist zwischen der Stirnseite des Abrollrohrs 38 und der gegenüberliegenden Bodenfläche des ersten Gehäuseteils 26 ein weiteres Federelement 44 angeordnet.

Das Federelement 44 umfasst eine Federstange 46, die über eine in die Stirnseite des Abrollrohrs 38 eingebrachte Durchtrittsöffnung 48 in das Abrollrohr 38 hineinreicht. Auf der Federstange 46 ist eine Zusatzfeder 50 und eine Zuganschlagfeder 52 geführt. Während die Zusatzfeder sich an der Bodenfläche des zweiten Gehäuseteils 26 befindet, ist die Zuganschlagfeder 52 am gegenüberliegenden Ende der Federstange 46, also im Abrollrohr 38, angeordnet.

Die Federstange 46 ist dabei freistehend und reibungsfrei gelagert, so dass zwischen Federstange 46 und Durchtrittsöffnung 48 ein Ringspalt 54 verbleibt. Der verbleibende Ringspalt 54 ist als eine weitere Drosselöffnung 40 ausgebildet.

Bei Ein- und Ausfedervorgängen der Luftfeder 10 und den dadurch verbundenen Hubbewegungen innerhalb der Luftfeder 10 entstehen aufgrund der unterschiedlichen wirksamen Durchmesser 14, 20 der beiden Arbeitskammern 12, 18 Differenzdrücke in den Arbeitskammern, die zu Luftströmungen durch die Drosselöffnungen 40 (Luftdämpfung) führen.

Die Erfindung zeichnet sich vor allem dadurch aus, dass beim Ein- und Ausfedern keine reibungsbehafteten Relativbewegungen innerhalb der Luftfeder 10 auftreten.

### BEZUGSZEICHENLISTE

- 10: Luftfeder
- 12: erste Arbeitskammer
- 14: wirksamer Durchmesser der ersten Arbeitskammer
- 16: Volumen der ersten Arbeitskammer
- 18: zweite Arbeitskammer
- 20: wirksamer Durchmesser der zweiten Arbeitskammer
- 22: Volumen der zweiten Arbeitskammer
- 24: erstes Gehäuseteil
- 26: zweites Gehäuseteil
- 28: erster Rollbalg
- 30: erste Abrollfläche
- 32: zweiter Rollbalg
- 34: zweite Abrollfläche
- 36: dritter Rollbalg
- 38: Abrollrohr
- 40: Drosselöffnung
- 42: Entlüftungsbohrungen
- 44: Federlement
- 46: Federstange
- 48: Durchtrittsöffnung
- 50: Zusatzfeder
- 52: Zuganschlagfeder
- 54: Ringspalt
- P₁: Arbeitsdruck der ersten Arbeitskammer
- P₂: Arbeitsdruck der zweiten Arbeitskammer
- P_{∞}: Umgebungsdruck

## Patentansprüche

1. Luftfeder (10) mit einer ersten und einer zweiten Arbeitskammer (12, 18) mit unterschiedlichen Durchmessern (14, 20) und Volumina (16, 22), wobei die beiden Arbeitskammern (12, 18) jeweils von einem ersten und einem zweiten Gehäuseteil (24, 26), einer ersten und einer zweiten Abrollfläche (30, 34), sowie einem ersten und einem zweiten, zwischen den entsprechenden Gehäuseteilen (24, 26) und den entsprechenden Abrollflächen (30, 34) angeordneten Rollbalg (28, 32) begrenzt sind, und die beiden Arbeitskammern (12, 18) in ihrem Volumen (16, 18) veränderbar sind und über mehrere Drosselöffnungen (40) miteinander in Verbindung stehen, **dadurch gekennzeichnet, dass** die zweite Abrollfläche (34) zumindest teilweise der Mantelfläche eines mit dem ersten Gehäuseteil (24) fest verbundenen, zentral angeordneten, bereichsweise in die zweite Arbeitskammer (18) hineinreichenden, rohrförmigen Körpers - Abrollrohr (38) - entspricht, und dass eine Trennung und Abdichtung der beiden Arbeitskammern (12, 18) zueinander über den zweiten Rollbalg (32) und einen dritten Rollbalg (36) realisiert ist, und der dritte Rollbalg (36) dem zweiten Rollbalg (32), insbesondere spiegelsymmetrisch, gegenüberliegend zwischen dem zweiten Gehäuseteil (26) und der zweiten Abrollfläche (34) angeordnet ist.

2. Luftfeder (10) nach Anspruch 1, **dadurch gekennzeichnet, dass** die erste Abrollfläche (30) zumindest teilweise der Mantelfläche des zweiten Gehäuseteils (26) entspricht.

3. Luftfeder (10) nach Anspruch 1 und 2, **dadurch gekennzeichnet, dass** die Drosselöffnungen (40) in das Abrollrohr (38) eingebracht sind.

4. Luftfeder (10) nach Anspruch 1 bis 3, **dadurch gekennzeichnet, dass** in das zweite Gehäuseteil (26) im Bereich zwischen dem zweiten und dem dritten Rollbalg (32, 36) Entlüftungsbohrungen (42) eingebracht sind.

5. Luftfeder (10) nach einem der vorangehenden Ansprüche, **dadurch gekennzeichnet, dass** zwischen der zweiten Arbeitskammer (18) und dem in die zweite Arbeitskammer (18) hineinreichende Bereich des Abrollrohrs (38) ein zusätzliches, zwischen Abrollrohr (38) und zweitem Gehäuseteil (26) wirksames Federelement (44) angeordnet ist.

6. Luftfeder (10) nach Anspruch 5, **dadurch gekennzeichnet, dass** das Federelemente (44) eine zentral angeordnete, mit der Bodenfläche des zweiten Gehäuseteils (26) fest verbundene und in das Abrollrohr (38) über eine zugeordnete Durchtrittsöffnung (48) hineinreichende Federstange (46) sowie jeweils eine von der Federstange (46) geführte, an der Bodenfläche befindliche Zusatzfeder (50) und eine im Abrollrohr (38) befindliche, zwischen Federstange (46) und Abrollrohr (28) wirksame Zuganschlagfeder (52) umfassen.

7. Luftfeder (10) nach Anspruch 5 und 6, **dadurch gekennzeichnet, dass** die Federstange (46) freistehend und reibungsfrei in der Durchtrittsöffnung (48) des Abrollrohrs (38) geführt ist und zwischen der Federstange (46) und der Durchtrittsöffnung (48) ein Ringspalt (54) verbleibt.

8. Luftfeder (10) nach Anspruch 7, **dadurch gekennzeichnet, das** der Ringspalt (54) als Drosselöffnung (40) ausgebildet ist.

9. Luftfeder (10) nach einem der vorangehenden Ansprüche, **dadurch gekennzeichnet, dass** sich der Durchmesser der ersten und/oder zweiten Abrollfläche (30, 34) in Achsrichtung ändert.

## Claims

1. Pneumatic spring (10) with a first and a second chamber (12, 18) having different diameters (14, 20) and volumes (16, 22), the two chambers (12, 18) being in each case bounded by a first and a second casing portion (24, 26), a first and a second roll-off surface (30, 34), and a first and a second roll-type bellows (28, 32) arranged between the corresponding casing portions (24, 26) and the corresponding roll-off surfaces (30, 34), and the two chambers (12, 18) being variable in their volume (16, 18) and communicating with one another via a plurality of restriction apertures (40),
**characterised in that** the second roll-off surface (34) corresponds at least partially to the circumferential surface of a centrally disposed, tubular body - the roll-off tube (38) - which is permanently joined to the first casing portion (24) and in places extends into the second chamber (18), and that separation and sealing of the two chambers (12, 18) from one another is realised via the second roll-type bellows (32) and a third roll-type bellows (36), and the third roll-type bellows (36) is arranged opposite the second roll-type bellows (32), more particularly in mirror symmetry, between the second casing portion (26) and the second roll-off surface (34).

2. Pneumatic spring (10) according to claim 1, **characterised in that** the first roll-off surface (30) corresponds at least partially to the circumferential surface of the second casing portion (26).

3. Pneumatic spring (10) according to claims 1 and 2, **characterised in that** the restriction apertures (40) are incorporated in the roll-off tube (38).

4. Pneumatic spring (10) according to claims 1 to 3, **characterised in that** air vents (42) are incorporated in the second casing portion (26) in the region between the second and the third roll-type bellows (32, 36).

5. Pneumatic spring (10) according to any one of the preceding claims, **characterised in that** arranged between the second chamber (18) and the region of the roll-off tube (38) that extends into the second chamber (18) is an additional spring member (44) which is operative between the roll-off tube (38) and the second casing portion (26).

6. Pneumatic spring (10) according to claim 5, **characterised in that** the spring member (44) comprises a centrally arranged spring rod (46) which is permanently joined to the floor of the second casing portion (26) and extends into the roll-off tube (38) via an operatively associated passage (48), along with a respective auxiliary spring (50) which is guided by the spring rod (46) and situated on the floor, and an extension-stop spring (52) situated in the roll-off tube (38) and operative between the spring rod (46) and the roll-off tube (28).

7. Pneumatic spring (10) according to claims 5 and 6, **characterised in that** the spring rod (46) is set in a freestanding and frictionless manner in the passage (48) of the roll-off tube (38), and an annular clearance (54) is left between the spring rod (46) and the passage (48).

8. Pneumatic spring (10) according to claim 7, **characterised in that** the annular clearance (54) is configured as the restriction aperture (40).

9. Pneumatic spring (10) according to any one of the preceding claims, **characterised in that** the diameter of the first and/or second roll-off surface (30, 34) varies in the axial direction.

## Revendications

1. Ressort pneumatique (10) avec une première et une seconde chambres de travail (12, 18) avec diamètres (14, 20) et volumes (16, 22) différents, les deux chambres de travail (12, 18) étant délimitées respectivement par une première et une seconde parties de boîtier (24, 26), une première et une seconde surfaces de roulement (30, 34) ainsi que par un premier et un second soufflets de roulement (28, 32) disposés entre les parties correspondantes du boîtier (24, 26) et les surfaces de roulement correspondantes (30, 34), et les volumes (16, 18) des deux chambres de travail (12, 18) étant modifiables et étant en relation l'un avec l'autre via plusieurs orifices d'étranglement (40), **caractérisé en ce que** la seconde surface de roulement (34) correspond au moins partiellement à la surface d'enveloppe d'un corps tubulaire - tube de roulement (38) - relié solidairement à la première partie de boîtier (24), disposé centralement et pénétrant par secteur dans la seconde chambre de travail (18), et **en ce qu'**une séparation et étanchéification des deux chambres de travail (12, 18) l'une par rapport à l'autre est réalisée par l'intermédiaire du second soufflet (32) et d'un troisième soufflet (36), et que le troisième soufflet (36)
est disposé opposé au second soufflet (32), en particulier en symétrie miroir, entre la seconde partie de boîtier (26) et la seconde surface de roulement (34).

2. Ressort pneumatique (10) conformément à la revendication 1, **caractérisé en ce que** la première surface de roulement (30) correspond au moins partiellement à la surface d'enveloppe de la seconde partie du boîtier (26).

3. Ressort pneumatique (10) conformément aux revendications 1 et 2, **caractérisé en ce que** les orifices d'étranglement (40) sont placés dans le tube de roulement (38).

4. Ressort pneumatique (10) conformément aux revendications 1 à 3, **caractérisé en ce que** des trous d'aération (42) sont insérés dans la seconde partie du boîtier (26), dans la zone entre le second et le troisième soufflets (32, 36).

5. Ressort pneumatique (10) conformément à l'une des revendications précédentes, **caractérisé en ce qu'**un élément à ressort supplémentaire (44), actif entre le tube de roulement (38) et la seconde partie de boîtier (26), est disposé entre la seconde chambre de travail (18) et la zone du tube de roulement (38) pénétrant dans la seconde chambre de travail (18).

6. Ressort pneumatique (10) conformément à la revendication 5, **caractérisé en ce que** l'élément à ressort (44) comprend une tige de ressort disposée centralement, reliée solidairement à la surface au fond
de la seconde partie du boîtier (26) et pénétrant dans le tube de roulement (38) via une ouverture de passage correspondante (48), ainsi que respectivement un ressort supplémentaire (50) guidé par la tige de ressort (46) et se trouvant sur la surface du fond et un ressort de butée de traction (52) se trouvant dans le tube de roulement (28), actif entre la tige de ressort (46) et le tube de roulement (28).

7. Ressort pneumatique (10) conformément aux revendications 5 et 6, **caractérisé en ce que** la tige de ressort (46) est guidée librement et sans exercer de friction dans l'ouverture de passage (48) du tube de roulement (38) et **en ce qu'**il demeure un espace annulaire (54) entre la tige de ressort (46) et l'ouverture de passage (48).

8. Ressort pneumatique (10) conformément à la revendication 7, **caractérisé en ce que** l'espace annulaire (54) est réalisé sous la forme d'un orifice d'étranglement (40).

9. Ressort pneumatique (10) conformément à l'une des revendications précédentes, **caractérisé en ce que** le diamètre de la première et / ou de la seconde surface de roulement (30, 34) se modifie dans le sens de l'axe.
